# EUROPEAN PATENT SPECIFICATION

(11) **EP 3 151 384 B1**
(45) Date of publication and mention of the grant of the patent: **28.07.2021**
(21) Application number: 15187715.6
(22) Date of filing: 30.09.2015
(51) Int. Cl.: H02K 9/04, H02K 1/20

(54) **GENERATOR PREFERABLY OF A WIND TURBINE**
GENERATOR, VORZUGSWEISE EINER WINDTURBINE
GÉNÉRATEUR DE PRÉFÉRENCE D'UNE ÉOLIENNE

(43) Date of publication of application: 05.04.2017
(73) Proprietor: Flender GmbH, 46395 Bocholt (DE)
(72) Inventor: Soerensen, Peter Hessellund, 8740 Brædstrup (DK)
(74) Representative: Michalski Hüttermann & Partner Patentanwälte mbB

(56) References cited:
- EP-A1- 2 670 026
- DE-A1- 3 334 501
- GB-A- 358 240
- None

## Description

The invention relates to a generator preferably of a wind turbine.

EP 2 670 026 A1 shows a stator stack for a stator of a wind turbine generator. The stator stack comprises several lamination sheets. The first intermediate lamination sheet comprises a first cut-out for forming a cooling channel between the first lamination sheet and the second lamination sheet such that a cooling fluid is guidable through the cooling channel.

EP 2 600 495 A1 shows a stator stack for a stator of a wind turbine generator. The stack comprises a plurality of plates having main planar surfaces, the surfaces extending in a circumferential direction to a larger extent than in a radial direction, wherein the plurality of plates comprises at least a first plate having a first through opening of a first shape, and a second plate having a second through opening of a second shape different from the first shape, wherein the plates are bounded at their main surfaces to form the stack such that a cooling conduit is formed inside the stack by at least partial overlap of the first through opening and the second through opening, wherein cooling fluid is guidable within the cooling conduit.

GB 358 240 A shows a generator with three different lamination sheets. The different lamination sheets are stacked on each other symmetrically such that one of the three different lamination sheets lies in a mirror plane.

DE 33 34 501 A1 shows a generator comprising a plurality of lamination sheets. The lamination sheets comprise through openings, wherein there is only an overlap of one side-opened through opening with a closed through opening.

The increasing nominal power of modern wind turbine generators leads to increased power losses and in increased heat production.

Hence, it is the object of the invention to provide a generator with a high cooling performance.

The object is solved by the features of the independent claim.

Further embodiments and improvements of the invention are listed in the dependent claims.

A generator for producing electrical power with a stator and a rotor preferably for use in a wind turbine,
- the stator comprising stacked lamination sheets and stator windings,
- the rotor comprising magnets and being rotatable in circumferential direction,
- the magnets and the stator windings facing each other via an air gap extending in circumferential direction,
the stator or a stator segment of the stator comprising first lamination sheets and second lamination sheets being stacked on each other,
- the first lamination sheet comprising a first stator tooth area extending in radial direction from a first stator yoke area,
- the first stator tooth area comprising a closed first through-opening extending in radial direction,
- the second lamination sheet comprising a second stator tooth area extending in radial direction from a second stator yoke area,
- the second stator tooth area comprising a second through-opening extending in radial direction and comprising an air gap sided opening and non-air gap sided closed end at the stator tooth area,
- the second stator yoke area comprising a third through-opening extending in radial direction and comprising an non-air gap sided opening and an air gap sided closed end,

Wherein the first closed through opening of the first lamination sheet overlaps with the second through opening of the second lamination sheet being located adjacent to the first lamination sheet thus forming/building a first fluid connection in axial direction. The first closed through-opening of the first lamination sheet overlaps with the third through opening of the second lamination sheet being located adjacent to the first lamination sheet forming/building a second fluid connection in axial direction.

The stator or the stator segment provides a high cooling performance with a rather low pressure loss and a huge cooling surface provided by the cooling ducts and connections. Additionally, the magnetic flux in the lamination sheets created by the stator windings is not weakened significantly by the through openings. Additionally, equally distributed small radial cooling channels provide a smooth magnetic flux reducing the torque ripple of the generator.

Optionally, the generator can also work as or be an electrical motor.

Preferably, the closed first through-opening is extending in radial direction into the first yoke area and the air gap sided closed end of the third through-opening ending at the second stator yoke area. Thus the mechanical stability and magnetic flux cross section is increased.

Preferably, a first plurality of first lamination sheets being stacked adjacent to each other.
A second plurality of second lamination sheets being stacked adjacent to each other.
First and the second pluralities of lamination sheets are located adjacent to each other alternating in axial direction, wherein
the first through-openings, the second through openings and the third through-openings of the stacked lamination sheets forming first, second and third fluid (cooling) ducts in radial direction,
the first fluid ducts and the second fluid ducts being connected via the respective first fluid connections, and the first fluid ducts and the third fluid ducts being connected via the respective second fluid connections,
thus forming network of fluid ducts enabling the flow of a cooling fluid between the air gap and the non air gap side of the stator or the stator segment.

Preferably, the width of the first through-opening and/ or the second through opening is between 1mm and 20mm, more preferably between 2mm and 5mm.

Preferably, the heat produced in the stator teeth by the currents of the stator windings will be transferred through the stacked lamination sheets to the cooling fluid in a short distance thus avoiding thermal hot spots in the stator teeth. As an example, the maximum distance dmax between any point or location of the stator tooth area of the stacked lamination sheets and the nearest (cooling) fluid duct and/or a (cooling) fluid connection 321, 320 is less than 10mm, more preferably less than 5mm, or more preferably less than 3,5mm. The distance between any point or location of the stator tooth area of the stacked lamination sheets and the nearest (cooling) fluid duct and/or a fluid connection in the inner of the stator teeth area is less than the maximal distance in most points/locations of the stator teeth due to the disclosed air duct design.

The maximum distance between any point of the stacked lamination sheets and a (cooling) fluid duct and/or a (cooling) fluid connection is less than 10mm, more less than 5mm, more preferable less than 3,5mm.

Preferably, the first and second lamination sheets are covered with a coating being electrically non conductive to prevent eddy currents.

Preferably, wherein the walls of the first, second and third through-openings are free of coating to increase thermal conductivity and to ease the production of the lamination sheets.

Preferably, the outer shape and dimensions of the first and the second lamination sheets are essentially identical.

Preferably, the width of the third through-opening of the second lamination sheet increases in radial and in non-air gap direction are forming a diffuser in order to reduce the fluid flow resistance. Thus, a complex shape e.g. a diffuser, can be manufactured in an easy way by just cutting out the third through-opening into the second lamination sheets.

Preferably, the first fluid ducts and the second fluid ducts have a rectangular or preferably essentially a quadratic cross section.

Preferably, the thickness of the lamination sheets are between 0.1mm to 2mm.

Preferably, the nominal output power of the generator is more than 100KW (kilowatt), preferably more than 1.5 MW (megawatt) .

Preferably, the magnets are permanent magnets , preferably of the type NdFeB.

Preferably, a third, through opening-free lamination sheet terminating the stator or the stator segment on one or both axial ends of the stator segment, wherein optionally, the third lamination sheet comprises through openings corresponding to area and the size of the first and second fluid connections.

Preferably, the width of the first through-opening and/or the width of the second through opening is between 1mm and 20mm, more preferably between 2mm and 5mm.
The resulting rather small through openings enable a smooth magnetic flux in the stator teeth being created by the stator windings.

Preferably, the ratio of the length of the first through opening of the first lamination sheet in relation to the length of the second through opening of the second lamination sheet is between 2 and 5, preferably between 3 and 4. The resulting short length of the first through opening leads to a high mechanical stability.

Preferably, the first fluid ducts and the second fluid ducts have a rectangular or quadratic cross section.

Preferably, the lamination sheets are fixed and/or embedded to each other by a resin.

Preferably, the first plurality of first lamination sheets comprises between one to eight first lamination sheets, preferably between two to six, preferable between three to five first lamination sheets. The second plurality of second lamination sheets comprises between one to eight second lamination sheets, preferably between two to six, preferable between three to five second lamination sheets,
wherein the number of first lamination sheets can differ in axial direction,
wherein the number of second lamination sheets can differ in axial direction. The first and/or second plurality of lamination sheets comprising just one lamination sheet requires attention during manufacturing as the resin fixing the lamination sheets should not cover or close the small fluid ducts. For reasons of simplification and understanding, the expression "plurality of lamination sheets" also encompasses the number "one lamination sheet" which cannot be stacked to each other evidentially.

Preferably, the stator is segmented in circumferential direction into a plurality of stator segments for easier transporting and mounting of large stators.

Preferably, the area of the through-openings of adjacent first and second lamination sheets are forming the walls of the first and second fluid ducts extending parallel to the plane spanned by the circumferential direction and the radial direction, wherein the overlapping area of the through-openings of adjacent first or adjacent second lamination sheets are forming the walls of the first and second fluid ducts) extending parallel to the plane spanned by the axial direction and the radial direction.

Preferably, one or several third, through opening-free lamination sheets are located between the first and the second plurality of lamination sheets or between two first lamination sheets or between two second lamination sheets enabling a defined adaptation of the respective cross sectional area of fluid ducts in axial direction or an adaptation of the number of the air ducts in axial direction.

Preferably, the second lamination sheet or sheets comprise a respective fourth closed through opening(s) overlapping with the first through-opening of an adjacent first lamination sheet thus forming/building a third fluid connection in axial direction between two adjacent first air ducts or two first through openings, the respective fourth closed through opening preferably extending in radial direction. Thus, the air flow is more evenly distributed to reduce thermal hot spots in the stator tooth area as mentioned above.

Preferably, the width of the radial extending through openings / fluid ducts are essentially equal resulting in a equal cross sectional area of the radial fluid ducts and a smooth fluid flow.

Preferably, the first radial extending through-opening of the first lamination sheet is divided into a fifth and a sixth closed radial extending through-opening at the center area of the stator tooth area,wherein the second lamination sheet comprises a fourth closed through opening extending in radial direction and located at the center area of the stator tooth area, wherein the two respective endings of the fifth and a sixth through-opening (overlap respectively with the two endings of the fourth closed through opening to form respective fluid connections in axial direction). Thus, thermal hot spots are reduced due to more equal distribution of the cooling fluid flow.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Figure 1: shows a principle partial view of a wind turbine generator;
- Figure 2: shows a principle cut-view along line II-II of the wind turbine generator shown in fig. 1;
- Figure 3: shows a 3D view of a lamination sheet as part of the stator of figure 2 or figure 7
- Figure 4: shows a 3D view of an enlarged part of the lamination sheet of figure 3
- Figure 5: shows another embodiment of the lamination sheet of figure 3 with a 3 D view of an enlarged part of the the stator of figure 3
- Figure 6: shows another embodiment of the lamination sheet of figure 3 with a 3 D view of an enlarged part of the the stator of figure 3
- Figure 7: shows an enlarged part of a lamination stator segment comprising stacked lamination sheets disclosed in figures 4 and 5

The illustration in the drawing is schematic. It is noted that in different figures, identical elements or features are provided with the same reference signs. In order to avoid unnecessary repetitions elements or features which have already been elucidated with respect to a previously described embodiment are not elucidated again at a later position of the description.

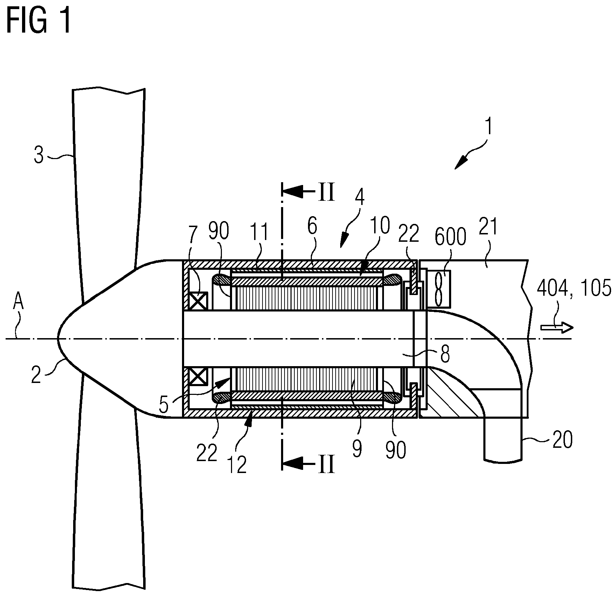

Fig. 1 shows a principle cut partial view of a wind turbine 1. The wind turbine 1 is a direct-drive wind turbine ready to be used for onshore or offshore applications and comprises a rotatable rotor hub 2 having a number of rotor blades 3 attached thereto. The rotor hub 2 is adapted to transfer rotational movements to a rotor 4. The rotor 4 is rotatably supported relative to a stator 5 and comprises permanent magnets 11 mounted on its inner surface and facing the stator 5. Therefore, the rotor 6 is supported on a respective bearing unit 7 disposed on a non-rotatable hollow shaft 8, whereby the stator 5 is supported on a stator frame 9. The stator frame 9 is directly supported on the central hollow shaft 8 which is extending in a 90° rounded angle and being connected to a vertical wind turbine tower 20.

An air-gap 10 extends between the stator 5 and the permanent magnets of the rotor 4 in axial direction 404. The radial dimensions of the air-gap 10 are ca. 6 mm. Both stator 5 and rotor 4 build the power generating unit, i. e. generator 12 of the wind turbine 1. The generator 12 has an "outer rotor 4 - inner stator 5" configuration. The centre axis of the generator 12 is denoted as A. On the non-drive-end of the rotor 4, a rotor brake disc 22 is mounted. On the drive-end, the rotor 4 is connected to the hub 2.

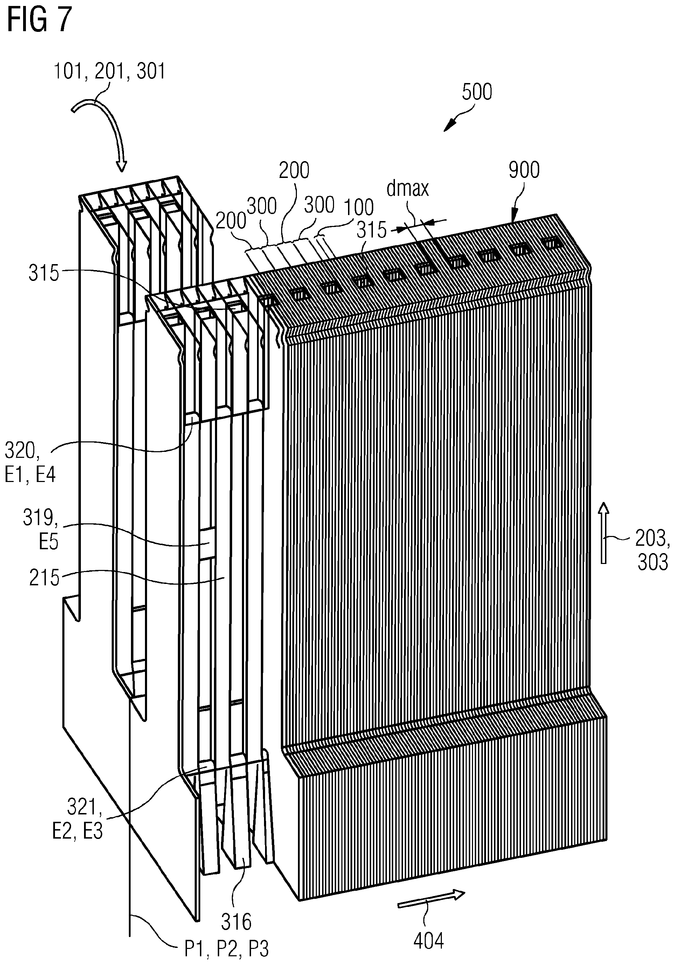

One or several fans 600 located at the stator 5 or at the nacelle 21 operate to create a cooling fluid flow in the generator to provide a pressure difference between the openings 317, 318 (Fig. 7) of the cooling ducts of the stator segment 5' .

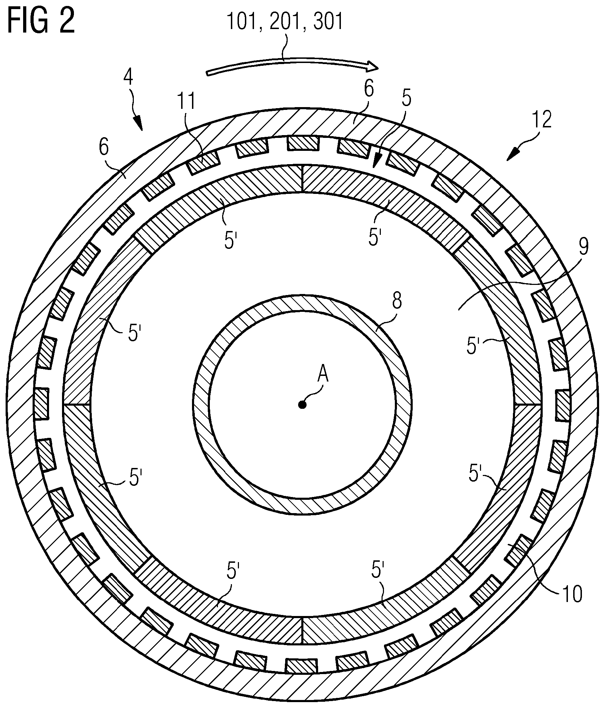

As is discernible from fig. 2 showing a principle cut-view along line II-II in fig. 1, the stator 5 is circumferentially segmented, i. e. comprises circumferentially disposed, ring-segment-like shaped stator segments 5'. The rotor 4 holds a number of permanent magnets 11 on their stator facing side. The stator segments 5' each hold a number of stator windings 22 (shown in fig. 1). The adjacent stator segments 5' are fixed to each other and are fixed to the stator frame 9 or to a stator plate 90 on each axial end of the stator 5.

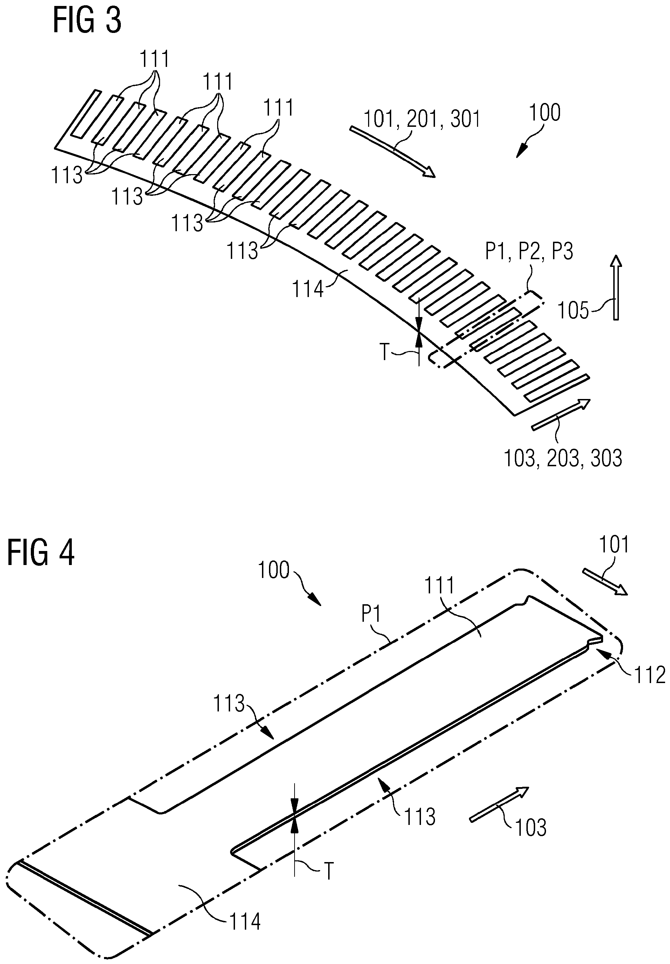

Fig. 3 illustrates a 3D view of a lamination sheet 100, which may be stacked to form a stator arrangement as the stator segment 5' of the generator 12 in Fig. 1 or a part of the stack arrangement according to figure 7. The lamination sheets 100 do not disclose through openings as cooling means which shown in the next figures.

The lamination sheet 100 illustrated in Fig. 3 forms a 60° sector of a circle and extends in circumferential direction 101 and also extends in radial direction 103. The thickness T of the plate 100 being measured perpendicular to the circumferential direction 101 and also perpendicular to the radial direction 103 may be between 0.1 and 2mm, preferably between 0.5 and 0.8 mm, for example.

The first plate further comprises plural protrusions 111 which upon stacking plural lamination sheets 100 on top of each other form plural teeth 111 of the stator segment 5'. Stator slots 113 will be formed between the teeth 111 upon stacking plural lamination sheets 100 on top of each other. The plural protrusions 111 and stator slots 113 are extending in radial direction from the base part 114 of the lamination sheet 100 forming the stator yoke 114.

Stator windings 22 (shown in fig 1) are located in the stator slots 113 between the stator teeth 111.

Fig. 4 illustrates a 3D view of an enlarged part P1 of the lamination sheet 100 of Fig. 3 (later also called third lamination sheet) comprising a stator tooth 111 extending in radial direction 103 from a stator yoke 114 which extends in circumferential direction 101. The stator tooth 111 is based on the stator yoke 114. The stator tooth 111 is surrounded by stator slots 113 on both sides. A stator wedge 112 is located at the top of the stator tooth 111.

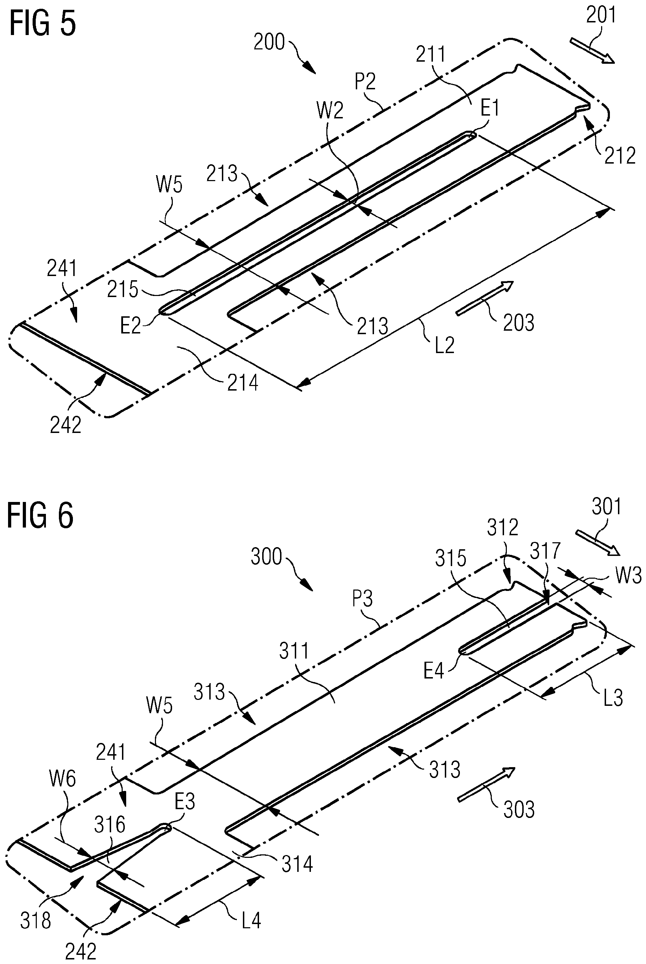

Fig. 5 illustrates another embodiment of the lamination sheet 100 of figure 3 showing an enlarged part P2 of the lamination sheet 100 resulting in a first lamination sheet 200. The first lamination sheet 200 comprises a stator tooth 211, also called first stator tooth area 211, extending in radial direction 203 and is surrounded by stator slots 213 on both sides. The first lamination sheet 200 further comprises a first stator yoke area 214 as base of the stator tooth 211. The stator yoke area 214 extends in circumferential direction 201. A stator wedge 212 is located at the air gap-sided top of the stator tooth 211.

The first stator tooth area 211 and the first stator yoke area 214 of the first lamination sheet 200 comprise a central, closed first through-opening 215 extending in radial direction 203 with a through-opening length L2 and a through-opening width W2 and a preferably rounded first through-opening ending area E1 located at the radial outer area (direction of arrow 203, air gap side) and a preferably rounded second through-opening ending area E2 located radial inner area (opposite direction of arrow 203, non-air gap side).

Fig. 6 illustrates another embodiment the lamination sheet 100 of figure 3 showing an enlarged part P3 of the lamination sheet 100 resulting in a second lamination sheet 300. The second lamination sheet 300 comprises a stator tooth area 311 extending in radial direction 303 from a stator yoke area 314 which is the base of the stator tooth 311 and which extends in circumferential direction 301. The stator tooth 311 is surrounded by stator slots 313 on both sides. A stator wedge 312 is located at the air gap-sided top of the stator tooth 311.

The stator tooth area 311 comprises a second through-opening 315 with a through-opening length L3 and a through-opening width W3 extending in radial direction 303. The second through-opening 315 comprises an opening 317 to its air gap-sided end and a closed end area E4 at the opposite end of the second through-opening 315 in radial direction 303.

The ratio of the width W5 of the first stator tooth area 311 in relation to the through-opening width W3 of the second through opening 315 is between 5 and 20, preferably between 8 and 14.

The width W2 of the first through-opening 215 (Fig. 5)and/ or the width W3 of the second through opening 315 is between 1mm and 20mm, more preferably between 2mm and 5mm.

The ratio of the length L2 of the first through opening 215 of the first lamination sheet 200 in relation to the length L3 of the second through opening 315 of the second lamination sheet 300 is between 2 and 5, preferably between 3 and 4.

The stator yoke area 314 of the second lamination sheet 300 comprises a second through-opening 316 extending in radial direction 303 with a through-opening length L2 and a through-opening width W2. The second through-opening 316 comprises an opening 318 to its shaft side / non-air gap end, also called inner stator end. Furthermore, the second through-opening 316 comprises a closed end area E3 at the opposite end of the first through-opening 315 in radial direction 303.

Preferably, the second through-opening's width W6 increases constantly in radial, non-air gap direction 303 (or opposite-direction of arrow 202, radial direction to the shaft 8) to form an fluid diffuser 316 shown in figure 7, easily produced by just cutting the respective through-opening 315.

The outer shape and dimensions of the first and the second lamination sheets 200, 300 are essentially the same.

The first lamination sheet 200 (Fig. 5) represents a 60° annular segment which together with the second plate 300 (Fig. 6) may form a stack 500 (Fig. 7) upon laminating a plurality of these plates 200, 300, in order to form a stator segment 5' spanning an angle interval of 60°. The axial direction 105, 404 is indicated by the arrow 105 in fig. 1 and the arrow 404 in figure 7.

Fig. 7 illustrates an exploded assembly drawing of an enlarged part P1, P2, P3 of the lamination (stacked) stator segment 500, 5' (Fig. 2) comprising the lamination sheets 100, 200, 300 of figures 4, 5 and 6.

The stator segment 500, 5' comprises the stacking of five first lamination sheets 200 on top of each other. Furthermore, five second lamination sheets 300 are stacked on top of the plural first lamination sheets 200 followed stacking one or more first lamination sheets 200 onto the plural second lamination sheets 300.

Thus, a five of first lamination sheets 200 are stacked adjacent to each other. Five of second lamination sheets 300 are stacked adjacent to each other. The five first lamination sheets 200 and the five second and second lamination sheets 300 are located adjacent to each other in an alternating way in axial direction 404.

The first closed through opening 215 of the first lamination sheet 200 overlaps with the second through opening 315 of the second lamination sheet 300 being located adjacent to the first lamination sheet 200 thus forming/building a first fluid connection 320, E1, E4 in axial direction 404.

The first closed through-opening 215 of the first lamination sheet 200 overlaps with the third through opening 316 of the second lamination sheet 300 being located adjacent to the first lamination sheet 200 forming a second fluid connection 321, E2, E3 in axial direction 404.

The first through-openings 215, the second through openings 315 and the third through-openings 316 of the respective stacked and adjacent first and second lamination sheets 200, 300 form first, second and third fluid (cooling) ducts extending in radial direction 103, 203, 303.

The first fluid ducts and the second fluid ducts are connected via the respective first fluid connections 320, E1, E4. The first fluid ducts and the third fluid ducts being connected via the respective second fluid connections 321, E2, E3, thus forming network of fluid ducts 320, 321 enabling the flow of a cooling fluid between the air gap 10 and the non air gap side of the stator 5 or the stator segment 5'.

The non-overlapping area of the through-openings 215, 315, 316 of adjacent first and second lamination sheets 200, 300 form the walls of the first and second fluid ducts extending parallel to the plane spanned by the circumferential direction 101, 201, 301 and the radial direction 203, 303.
The overlapping area of the through-openings 215, 315, 316 of adjacent first or adjacent second lamination sheets 200, 300 form the walls of the first and second fluid ducts extending parallel to the plane spanned by the axial direction 105, 404 and the radial direction 203, 303.

As an example, the maximum distance dmax between any point or location of the stator tooth area 111, 211, 311 of the stacked lamination sheets 100, 200, 300 and the nearest (cooling) fluid duct and/or a (cooling) fluid connection 321, 320 is less than 10mm, more preferably less than 5mm, or more preferably less than 3,5mm is shown as the axial distance between two adjacent through-openings 215. The distance between any point or location of the stator tooth area 111, 211, 311 of the stacked lamination sheets 100, 200, 300 and the nearest (cooling) fluid duct and/or a (cooling) fluid connection 321, 320 in the inner of the stator teeth area 111, 211, 311 is less than the maximal distance in most points/locations of the stator teeth 111, 211, 311 due to the disclosed air duct design. Thus, the negative influence of thermal hot spots in the stator tooth area will be decreased.

A third, through opening-free lamination sheet 100 of figure 4 terminate the stator segment 500, 5' on one or both axial ends of the stator segment 500, 5'. Optionally, the third lamination sheet 100 comprises through openings (not shown) corresponding to area and the size of the first and second fluid connections 320, E1, E4; 321, E2, E3.

Optionally, one or several third through opening-less lamination sheets 100 are located between the first and the second lamination sheets 200, 300 or lacated between two first or two second lamination sheets 200, 300 in a more or less regularly sequence. In figure 7, two adjacent third lamination sheets 100 are located between first lamination sheets 100.

The first, second and third lamination sheets 200, 300, 100 are covered with an electrically non-conductive coating 241 in order to prevent eddy currents during generator operation.

The walls parallel to the plane spanned by the radial direction 103, 203, 303 and the axial direction 105, 404 of the first, second and third through-openings 215, 315, 316 are covered with the same type of electrically non-conductive coating 242 to prevent corrosion at the wall or are optionally are free of coating to increase thermal conduction.

Optionally, the second lamination sheets 300 comprise a respective fourth closed through opening 319 overlapping with the first through-openings 215 of first lamination sheets 200 adjacent to each side of the second lamination sheets 300 thus forming/building a third fluid connection 319, E5 in axial direction 404 between two adjacent first air ducts or two first through openings 215. The fourth closed through opening 319 extends in radial direction 103, 203, 303.

At the openings 317 of the second through opening 315 of the second plates 300, the cooling fluid enters the stator segment 5' and at the openings 318 of the third through opening 316 of the second plates 300, the heated cooling fluid exits the stator segment 5', or vice versa.

Summarized, the stator segment 5' of fig. 7 provides a high cooling performance with a rather low pressure loss and a huge cooling surface provided by the cooling ducts and connections 320, 321. Additionally, the magnetic flux in the lamination sheets 200, 300 created by the stator windings 22 is not weakened significantly by the through openings 215, 315, 316.

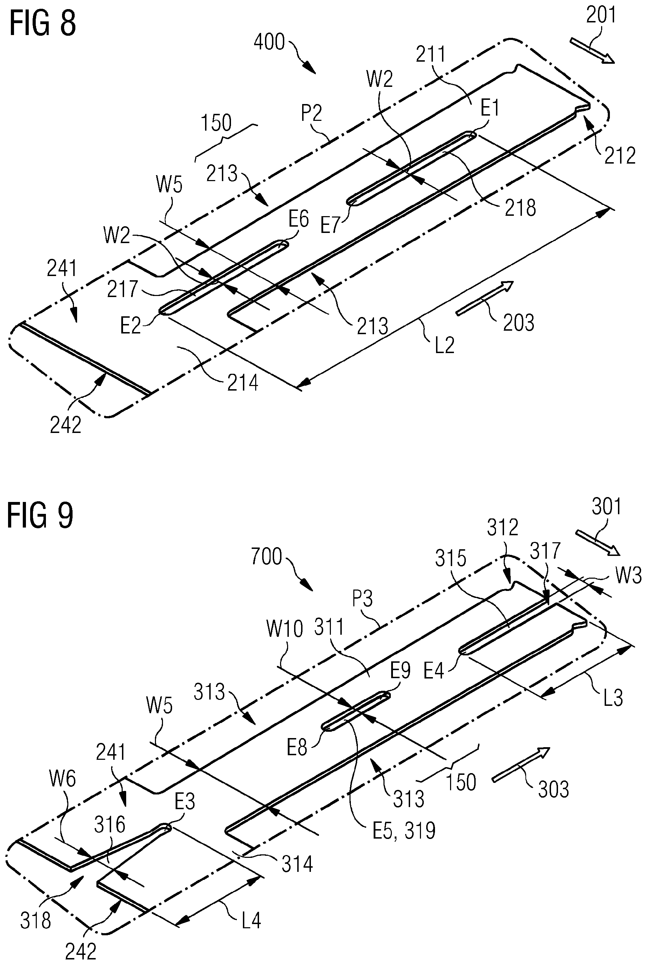

Fig. 8 illustrates a fourth lamination sheet 400 being a modification of the first lamination sheet 200 of figure 5 with an alternation of the first closed through opening 215 being divided into two closed through openings 217 and 218 comprising the respective width W2 extending in radial direction 203. The first through opening 215 is separated into two through openings 217, 218 at the center area 150 of the stator tooth area 211 resulting in a fifth and a sixth through opening 217, 218.
The fifth through opening 217 comprises a preferably rounded second through-opening ending area E2 (as through opening 215 in figure 5) located stator yoke area sided and a preferably rounded third through-opening ending area E6 located at the center area 150.
The sixth through opening 218 comprises a preferably rounded second through-opening ending area E1 (as through opening 215 in figure 5) located air gap sided and a preferably rounded fourth through-opening ending area E7 located at the at the center area 150.

Figure 9 illustrates a fifth lamination sheet 700 being a modification of the second lamination sheet 300 of figure 6 with an additional fourth closed through opening 319 comprising a width W10 and extending in radial direction 303 and located at the center area 150 of the stator tooth area 311.

The fourth through opening 319 comprises a preferably rounded fifth through-opening ending area E9 located air gap sided at the fourth through-opening ending area E7 of the fourth lamination sheet 400 (Fig. 8)

The fourth through opening 319 comprises a preferably rounded sixth through-opening ending area E9 located stator yoke area sided at the third through-opening ending area E6 of the fourth lamination sheet 400 (Fig. 8).

The fourth closed through opening 319 of the fifth lamination sheet 700 overlaps with the fifth closed through opening 217 of the fourth lamination sheet 400 adjacent to the fifth lamination sheet 700 thus forming/building a fourth fluid connection E6, E8 in axial direction 404.

The fourth closed through opening 319 of the fifth lamination sheet 700 overlaps with the sixth closed through opening 218 of the fourth lamination sheet 400 adjacent to the fifth lamination sheet 700 thus forming/building a fifth fluid connection E7, E9 in axial direction 404.

The fourth through openings 319, the fifth through openings 217 and a sixth through openings 218, the second through openings 315 and the third through openings 316 of the respective stacked and adjacent fourth and fifth second lamination sheets 400, 700 form fluid (cooling) ducts 319, 217, 218, extending in radial direction 103, 203, 303 and comprising essentially the same width W2, W10, W3 (except for the diffuser 316, starting with the same width W6 at the area E3 and then extending). This leads to an equal or similar cross sectional area of the air ducts 319, 217, 218 and a smooth fluid flow.

The fluid ducts 218 of the sixth through openings 218 and the fluid ducts 319 of the fourth through openings 319 are connected via the respective fluid connections E7, E9.
The fluid ducts 217 of the fifth through openings 217 and the fluid ducts 319 of the fourth through openings 319 are connected via the respective fluid connections E6, E8.

The combination of the fourth and fifth lamination sheets 400, 700 according to figure 8 and 9 provide in comparison to the first and second lamination sheets 200, 300 according to figure 5 and 6 additional and more distributed radial air ducts 218,217, 319 more equally distributing the cooling fluid in the stator 500 reducing thermal hot spots.

The cooling fluid is be preferably gaseous medium, e.g. air or carbon dioxide (CO2).

## Claims

1. Generator (12) for producing electrical power with a stator (5') and a rotor (4) preferably for use in a wind turbine (1),
- the stator (5, 5') comprising stacked lamination sheets (100, 200, 300) and stator windings (22),
- the rotor (4) comprising magnets (11) and being rotatable in circumferential direction (101, 201, 301),
- the magnets (11) and the stator windings (22) facing each other via an air gap (10) extending in circumferential direction (101, 201, 301),
- the stator (5, 5') or a stator segment (5') of the stator (5) comprising first lamination sheets (200) and second lamination sheets (300) being stacked on each other,
- the first lamination sheet (200) comprising a first stator tooth area (211) extending in radial direction (213) from a first stator yoke area (214);
- the first stator tooth area (211) comprising a closed first through-opening (215) extending in radial direction (103, 203, 303),
- the second lamination sheet (300) comprising a second stator tooth area (311) extending in radial direction (313) from a second stator yoke area (314),
- the second stator tooth area (311) comprising a second through-opening (315) extending in radial direction (313) and comprising an air gap (10) sided opening (317) and non-air gap sided closed end (E4) at the stator tooth area (311),
- the second stator yoke area (314) comprising a third through-opening (316) extending in radial direction (313) and comprising an non-air gap (10) sided opening (318) and an air gap (10) sided closed end (E3),
**characterized in that**
the first closed through opening (215) of the first lamination sheet (200) overlaps with the second through opening (315) of the second lamination sheet (300) being located adjacent to the first lamination sheet (200) thus forming/buil ding a first fluid connection (320, E1, E4) in axial direction (404, 105),
the first closed through-opening (215) of the first lamination sheet (200) overlaps with the third through opening (316) of the second lamination sheet (300) being located adjacent to the first lamination sheet (200) forming/building a second fluid connection (321, E2, E3) in axial direction (404, 105).

2. Generator according to claim 1, wherein
the closed first through-opening (215) extending in radial direction (103, 203, 303) into the first yoke area (214) and the air gap (10) sided closed end (E3) of the third through-opening (316) ending at the second stator yoke area (314).

3. Generator according to claim 1 or 2, wherein
a first plurality of first lamination sheets (200) being stacked adjacent to each other,
a second plurality of second lamination sheets (300) being stacked adjacent to each other,
wherein first and the second pluralities of lamination sheets (200, 300) being located adjacent to each other alternating in axial direction (404), wherein
the first through-openings (215), the second through openings (315) and the third through-openings (316) of the stacked lamination sheets (200, 300) forming first, second and third fluid ducts in radial direction (103, 203, 303),
the first fluid ducts and the second fluid ducts being connected via the respective first fluid connections (320, E1, E4), and
the first fluid ducts and the third fluid ducts being connected via the respective second fluid connections (321), thus forming network of fluid ducts (320, 321) enabling the flow of a cooling fluid between the air gap (10) and the non-air gap side of the stator (5) or the stator segment (5').

4. Generator according to one of the previous claims, wherein wherein the width (W2) of the first through-opening (215) and/ or the width (W3) of the second through opening (315) is between 1mm and 20mm, more preferably between 2mm and 5mm.

5. Generator according to one of the previous claims, wherein the first and second lamination sheets (200, 300) are covered with a coating being electrically non conductive,
wherein the walls of the first, second and third through-openings are free of coating.

6. Generator according to one of the previous claims, wherein the outer shape and dimensions of the first and the second lamination sheets (200, 300) are identical.

7. Generator according to one of the previous claims, wherein the width (W6) of the third through-opening (316) increases in radial and in non-air gap (10) direction (303, 203) forming a diffuser (316).

8. Generator according to one of the previous claims, wherein wherein the first fluid ducts and the second fluid ducts having a rectangular or quadratic cross section.

9. Generator according to one of the previous claims, wherein the stator (5) is segmented in circumferential direction (101, 201, 301) into a plurality of stator segments (5').

10. Generator according to one of the previous claims, wherein the nominal output power of the generator is more than 100KW (kilowatt), preferably more than 1.5 MW (megawatt).

11. Generator according to one of the previous claims, wherein the magnets (11) being permanent magnets (11), preferably of the type NdFeB.

12. Generator according to one of the previous claims, wherein a third, through opening-free lamination sheet (100) terminating the stator (5) or the stator segment (5') on one or both axial ends of the stator segment (5').

13. Generator according to one of the previous claims, wherein the maximum distance (dmax) between any point of the stator tooth area (111, 211, 311) of the stacked lamination sheets (100, 200, 300) and the nearest (cooling) fluid duct and/or (cooling) fluid connection (321, 320) is less than 10mm, more preferably less than 5mm, or more preferably less than 3,5mm.

14. Generator according to one of the previous claims, wherein the ratio of the length (L2) of the first through opening (215) of the first lamination sheet (200) in relation to the length (L3) of the second through opening (315) of the second lamination sheet (300) is between 2 and 5, preferably between 3 and 4.

15. Generator according to one of the previous claims, wherein the thickness (T) of the lamination sheets (100, 200, 300) being between 0.1mm to 2mm.

16. Generator according to one of the previous claims, wherein the non-overlapping area of the through-openings (215, 315, 316) of adjacent first and second lamination sheets (200, 300) forming the walls of the first and second fluid ducts extending parallel to the plane spanned by the circumferential direction (101, 201, 301) and the radial direction (203, 303), wherein
the overlapping area of the through-openings (215, 315, 316) of adjacent first or adjacent second lamination sheets (200, 300) forming the walls of the first and second fluid ducts extending parallel to the plane spanned by the axial direction (105, 404) and the radial direction (203, 303).

17. Generator according to one of the previous claims, wherein the lamination sheets (100, 200, 300) are fixed and/or embedded to each other by via a resin (900).

18. Generator according to one of the previous claims, wherein the first plurality of first lamination sheets (200) comprises between one to eight first lamination sheets (200), preferably between two to six, preferable between three to five first lamination sheets (200),
wherein the second plurality of second lamination sheets (300) comprises between one to eight second lamination sheets (300), preferably between two to six, preferable between three to five second lamination sheets (300),
wherein the number of first lamination sheets (200) can differ in axial direction (105, 404),
wherein the number of second lamination sheets (300) can differ in axial direction (105, 404).

19. Generator according to one of the previous claims, wherein the second lamination sheet or sheets (300) comprise a respective fourth closed through opening (319) overlapping with the first through-opening (215) of an adjacent first lamination sheet (200) thus forming/building a third fluid connection (319, E5) in axial direction (404, 105) between two adjacent first air ducts or two first through openings (215), the respective fourth closed through opening (319) preferably extending in radial direction (103, 203, 303).

20. Generator according to one of the previous claims, wherein the width (W) of the radial extending through openings () are essentially equal.

21. Generator according to one of the previous claims, wherein the first radial extending through-opening (215) of the first lamination sheet (200, 400) is divided into a fifth and a sixth closed radial extending through-opening (217, 218) at the center area (150) of the stator tooth area (211), wherein
the second lamination sheet (300, 700) comprises a fourth closed through opening (319) extending in radial direction (303) and located at the center area (150) of the stator tooth area (311),
wherein the two respective endings (E6, E7) of the fifth and a sixth through-opening (217, 218) overlap respectively with the two endings (E8, E9) of the fourth closed through opening (319) to form respective fluid connections (E7, E9, E6, E8) in axial direction (404).

## Patentansprüche

1. Generator (12) zum Erzeugen elektrischer Leistung mit einem Ständer (5') und einem Läufer (4) vorzugsweise zur Verwendung in einer Windturbine (1),
- wobei der Ständer (5, 5') gestapelte Laminierfolien (100, 200, 300) und Ständerwicklungen (22) umfasst,
- der Läufer (4) Magneten (11) umfasst und in einer Umfangsrichtung (101, 201, 301) drehbar ist,
- die Magneten (11) und die Ständerwicklungen (22) über einen Luftspalt (10), der sich in der Umfangsrichtung (101, 201, 301) erstreckt, einander gegenüberliegen,
- der Ständer (5, 5') oder ein Ständersegment (5') des Ständers (5) erste Laminierfolien (200) und zweite Laminierfolien (300) umfasst, die aufeinandergestapelt sind,
- die erste Laminierfolie (200) einen ersten Ständerzahnbereich (211) umfasst, der sich in radialer Richtung (213) von einem ersten Ständerjochbereich (214) erstreckt;
- der erste Ständerzahnbereich (211) eine geschlossene erste Durchgangsöffnung (215) umfasst, die sich in radialer Richtung (103, 203, 303) erstreckt,
- die zweite Laminierfolie (300) einen zweiten Ständerzahnbereich (311) umfasst, der sich in radialer Richtung (313) von einem zweiten Ständerjochbereich (314),
- der zweite Ständerzahnbereich (311) eine zweite Durchgangsöffnung (315) umfasst, die sich in radialer Richtung (313) erstreckt, und eine luftspalt-(10-)seitige Öffnung (317) und ein nichtluftspaltseitiges geschlossenes Ende (E4) am Ständerzahnbereich (311) umfasst,
- der zweite Ständerjochbereich (314) eine dritte Durchgangsöffnung (316) umfasst, die sich in radialer Richtung (313) erstreckt, und eine nicht-luftspalt (10) -seitige Öffnung (318) und ein luftspalt (10) -seitiges geschlossenes Ende (E3) umfasst,
**dadurch gekennzeichnet, dass**
die erste geschlossene Durchgangsöffnung (215) der ersten Laminierfolie (200) sich mit der zweiten Durchgangsöffnung (315) der zweiten Laminierfolie (300) überlappt, die benachbart zur ersten Laminierfolie (200) angeordnet ist, um dadurch eine erste Fluidverbindung (320, E1, E4) in axialer Richtung (404, 105) zu bilden/schaffen,
die erste geschlossene Durchgangsöffnung (215) der ersten Laminierfolie (200) sich mit der dritten Durchgangsöffnung (316) der zweiten Laminierfolie (300) überlappt, die benachbart zur ersten Laminierfolie (200) angeordnet ist, um eine zweite Fluidverbindung (321, E2, E3) in axialer Richtung (404, 105) zu bilden/schaffen.

2. Generator nach Anspruch 1, wobei
die geschlossene erste Durchgangsöffnung (215) sich in radialer Richtung (103, 203, 303) in den ersten Jochbereich (214) erstreckt, und das luftspalt (10) - seitige geschlossene Ende (E3) der dritten Durchgangsöffnung (316) am zweiten Ständerjochbereich (314) endet.

3. Generator nach Anspruch 1 oder 2, wobei
eine erste Mehrzahl von ersten Laminierfolien (200) benachbart zueinander gestapelt ist,
eine zweite Mehrzahl von zweiten Laminierfolien (300) benachbart zueinander gestapelt ist,
wobei die erste und die zweite Mehrzahl von Laminierfolien (200, 300) benachbart zueinander in axialer Richtung (404) abwechselnd angeordnet sind, wobei
die ersten Durchgangsöffnungen (215), die zweiten Durchgangsöffnungen (315) und die dritten Durchgangsöffnungen (316) der gestapelten Laminierfolien (200, 300) erste, zweite und dritte Fluidleitungen in radialer Richtung (103, 203, 303) bilden,
die ersten Fluidleitungen und die zweiten Fluidleitungen über die jeweiligen ersten Fluidverbindungen (320, E1, E4) verbunden sind, und
die ersten Fluidleitungen und die dritten Fluidleitungen über die jeweiligen zweiten Fluidverbindungen (321) verbunden sind, um dadurch ein Netzwerk von Fluidleitungen (320, 321) zu bilden, das den Durchfluss eines Kühlfluids zwischen der Luftspalt- (10) und der Nicht-Luftspaltseite des Ständers (5) oder des Ständersegments (5') ermöglicht.

4. Generator nach einem der vorhergehenden Ansprüche, wobei die Breite (W2) der ersten Durchgangsöffnung (215) und/oder die Breite (W3) oder zweiten Durchgangsöffnung (315) zwischen 1 mm und 20 mm, insbesondere zwischen 2 mm und 5 mm liegt.

5. Generator nach einem der vorhergehenden Ansprüche, wobei die ersten und die zweiten Laminierfolien (200, 300) mit einer Beschichtung überzogen sind, die elektrisch nichtleitend ist,
wobei die Wände der erste, der zweiten und der dritten Durchgangsöffnung ohne Beschichtung sind.

6. Generator nach einem der vorhergehenden Ansprüche, wobei die äußere Form und die äußeren Abmessungen der ersten und der zweiten Laminierfolien (200, 300) identisch sind.

7. Generator nach einem der vorhergehenden Ansprüche, wobei die Breite (W6) der dritten Durchgangsöffnung (316) in radialer und in Nicht-Luftspalt- (10)Richtung (303, 203) zunimmt und einen Diffusor (316) bildet.

8. Generator nach einem der vorhergehenden Ansprüche, wobei die ersten Fluidleitungen und die zweiten Fluidleitungen einen rechteckigen oder quadratischen Querschnitt aufweisen.

9. Generator nach einem der vorhergehenden Ansprüche, wobei der Ständer (5) in Umfangsrichtung (101, 201, 301) in eine Mehrzahl von Ständersegmenten (5') segmentiert ist.

10. Generator nach einem der vorhergehenden Ansprüche, wobei die Nennausgangsleistung des Generators über 100 KW (Kilowatt), vorzugsweise über 1,5 MW (Megawatt) beträgt.

11. Generator nach einem der vorhergehenden Ansprüche, wobei die Magneten (11) Dauermagneten (11), vorzugsweise vom Typ NdFeB, sind.

12. Generator nach einem der vorhergehenden Ansprüche, wobei eine dritte, durchgangsöffnungsfreie Laminierfolie (100) den Ständer (5) oder das Ständersegment (5') an einem oder beiden axialen Enden des Ständersegments (5') abschließt.

13. Generator nach einem der vorhergehenden Ansprüche, wobei der größte Abstand (dmax) zwischen jedem Punkt des Ständerzahnbereichs (111, 211, 311) der gestapelten Laminierfolien (100, 200, 300) und der nächstgelegenen (Kühl-)Fluidleitung und/oder (Kühl-)Fluidverbindung (321, 320) kleiner als 10 mm, vorzugsweise kleiner als 5 mm oder insbesondere kleiner als 3,5 mm ist.

14. Generator nach einem der vorhergehenden Ansprüche, wobei das Verhältnis der Länge (L2) der ersten Durchgangsöffnung (215) der ersten Laminierfolie (200) zur Länge (L3) der zweiten Durchgangsöffnung (315) der zweiten Laminierfolie (300) zwischen 2 und 5, vorzugsweise zwischen 3 und 4 liegt.

15. Generator nach einem der vorhergehenden Ansprüche, wobei die Dicke (T) der Laminierfolie (100, 200, 300) zwischen 0,1 mm und 2 mm liegt.

16. Generator nach einem der vorhergehenden Ansprüche, wobei der nichtüberlappende Bereich der Durchgangsöffnungen (215, 315, 316) von benachbarten ersten und zweiten Laminierfolien (200, 300) die Wände der ersten und zweiten Fluidleitungen bildet, die sich parallel zu der Ebene erstrecken, die durch die Umfangsrichtung (101, 201, 301) und die radiale Richtung (203, 303) umspannt wird, wobei
die überlappenden Bereiche der Durchgangsöffnungen (215, 315, 316) von benachbarten ersten oder benachbarten zweiten Laminierfolien (200, 300) die Wände der ersten und zweiten Fluidleitungen bilden, die sich parallel zu der Ebene erstrecken, die durch die Umfangsrichtung (105, 404) und die radiale Richtung (203, 303) umspannt wird.

17. Generator nach einem der vorhergehenden Ansprüche, wobei die Laminierfolien (100, 200, 300) durch ein Harz (900) aneinander fixiert und/oder ineinander eingebettet sind.

18. Generator nach einem der vorhergehenden Ansprüche, wobei die erste Mehrzahl von ersten Laminierfolien (200) eine bis acht erste Laminierfolien (200), vorzugsweise zwei bis sechs, vorzugsweise drei bis fünf erste Laminierfolien (200) umfasst,
wobei die zweite Mehrzahl von zweiten Laminierfolien (300) eine bis acht zweite Laminierfolien (300), vorzugsweise zwei bis sechs, vorzugsweise drei bis fünf zweite Laminierfolien (300) umfasst,
wobei die Anzahl von ersten Laminierfolien (200) in axialer Richtung (105, 404) differieren kann,
wobei die Anzahl von zweiten Laminierfolien (300) in axialer Richtung (105, 404) differieren kann.

19. Generator nach einem der vorhergehenden Ansprüche,
wobei die zweite Laminierfolie oder die zweiten Laminierfolien (300) eine jeweilige vierte geschlossene Durchgangsöffnung (319) umfassen, die sich mit der ersten Durchgangsöffnung (215) einer benachbarten ersten Laminierfolie (200) überlappt, um dadurch eine dritte Fluidverbindung (319, E5) in axialer Richtung (404, 105) zwischen zwei benachbarten ersten Luftleitungen oder zwei ersten Durchgangsöffnungen (215) zu bilden/schaffen, wobei die jeweilige vierte geschlossene Durchgangsöffnung (319) sich vorzugsweise in radialer Richtung (103, 203, 303) erstreckt.

20. Generator nach einem der vorhergehenden Ansprüche, wobei die Breite (W) der sich radial erstreckenden Durchgangsöffnungen () im Wesentlich gleich ist.

21. Generator nach einem der vorhergehenden Ansprüche, wobei die erste sich radial erstreckende Durchgangsöffnung (215) der ersten Laminierfolie (200, 400) in eine fünfte und eine sechste geschlossene, sich radial erstreckende Durchgangsöffnung (217, 218) im Mittelbereich (150) des Ständerzahnbereichs (211) geteilt ist, wobei
die zweite Laminierfolie (300, 700) eine vierte geschlossene Durchgangsöffnung (319) umfasst, die sich in radialer Richtung (303) erstreckt und im Mittelbereich (150) des Ständerzahnbereichs (311) angeordnet ist,
wobei die beiden jeweiligen Enden (E6, E7) der fünften und einer sechsten Durchgangsöffnung (217, 218) sich jeweils mit den beiden Enden (E8, E9) der vierten geschlossenen Durchgangsöffnung (319) überlappen, um jeweilige Fluidverbindungen (E7, E9, E6, E8) in axialer Richtung (404) zu bilden.

## Revendications

1. Générateur (12) destiné à produire de l'énergie électrique avec un stator (5') et un rotor (4), de préférence pour une utilisation dans une éolienne (1),
- le stator (5, 5') comprenant des feuilles de stratification empilées (100, 200, 300) et des enroulements de stator (22),
- le rotor (4) comprenant des aimants (11) et étant rotatif dans une direction circonférentielle (101, 201, 301),
- les aimants (11) et les enroulements de stator (22) se faisant face par le biais d'un entrefer (10) s'étendant dans la direction circonférentielle (101, 201, 301),
- le stator (5, 5') ou un segment de stator (5') du stator (5) comprenant des premières feuilles de stratification (200) et des deuxièmes feuilles de stratification (300) empilées les unes sur les autres,
- la première feuille de stratification (200) comprenant une première zone de dent de stator (211) s'étendant dans une direction radiale (213) depuis une première zone de culasse de stator (214),
- la première zone de dent de stator (211) comprenant une première ouverture traversante fermée (215) s'étendant dans une direction radiale (103, 203, 303),
- la deuxième feuille de stratification (300) comprenant une deuxième zone de dent de stator (311) s'étendant dans une direction radiale (313) depuis une deuxième zone de culasse de stator (314),
- la deuxième zone de dent de stator (311) comprenant une deuxième ouverture traversante (315) s'étendant dans une direction radiale (313) et comprenant une ouverture (317) côté entrefer (10) et une extrémité fermée (E4) côté opposé à l'entrefer au niveau de la zone de dent de stator (311),
- la deuxième zone de culasse de stator (314) comprenant une troisième ouverture traversante (316) s'étendant dans une direction radiale (313) et comprenant une ouverture (318) côté opposé à l'entrefer (10) et une extrémité fermée (E3) côté entrefer (10),
**caractérisé en ce que**
la première ouverture traversante fermée (215) de la première feuille de stratification (200) chevauche la deuxième ouverture traversante (315) de la deuxième feuille de stratification (300) située de façon adjacente à la première feuille de stratification (200), formant/ construisant ainsi un premier raccord de fluide (320, E1, E4) dans une direction axiale (404, 105),
la première ouverture traversante fermée (215) de la première feuille de stratification (200) chevauche la troisième ouverture traversante (316) de la deuxième feuille de stratification (300) située de façon adjacente à la première feuille de stratification (200), formant/ construisant ainsi un deuxième raccord de fluide (321, E2, E3) dans la direction axiale (404, 105).

2. Générateur selon la revendication 1, dans lequel la première ouverture traversante fermée (215) s'étend dans la direction radiale (103, 203, 303) à l'intérieur de la première zone de culasse (214) et l'extrémité fermée (E3) côté entrefer (10) de la troisième ouverture traversante (316) se termine au niveau de la deuxième zone de culasse de stator (314).

3. Générateur selon la revendication 1 ou 2, dans lequel
une première pluralité de premières feuilles de stratification (200) sont empilées les unes adjacentes aux autres,
une deuxième pluralité de deuxièmes feuilles de stratification (300) sont empilées les unes adjacentes aux autres,
les première et deuxième pluralités de feuilles de stratification (200, 300) étant situées les unes adjacentes aux autres en alternant dans la direction axiale (404), dans lequel
les premières ouvertures traversantes (215), les deuxièmes ouvertures traversantes (315) et les troisièmes ouvertures traversantes (316) des feuilles de stratification empilées (200, 300) forment des premiers, deuxièmes et troisièmes conduits de fluide dans la direction radiale (103, 203, 303),
les premiers conduits de fluide et les deuxièmes conduits de fluide sont raccordés par le biais des premiers raccords de fluide respectifs (300, E1, E4), et
les premiers conduits de fluide et les troisièmes conduits de fluide sont raccordés par le biais des deuxièmes raccords de fluide respectifs (321), formant ainsi un réseau de conduits de fluide (300, 321) permettant l'écoulement d'un fluide frigorigène entre l'entrefer (10) et le côté opposé à l'entrefer du stator (5) ou du segment de stator (5').

4. Générateur selon une des revendications précédentes, dans lequel la largeur (W2) de la première ouverture traversante (215) et/ou la largeur (W3) de la deuxième ouverture traversante (315) se situent entre 1 mm et 20 mm, mieux encore entre 2 mm et 5 mm.

5. Générateur selon une des revendications précédentes, dans lequel les premières et deuxièmes feuilles de stratification (200, 300) sont recouvertes d'un revêtement électriquement non conducteur, les parois des premières, deuxièmes et troisièmes ouvertures traversantes étant dépourvues de revêtement.

6. Générateur selon une des revendications précédentes, dans lequel la forme et les dimensions extérieures des premières et deuxièmes feuilles de stratification (200, 300) sont identiques.

7. Générateur selon une des revendications précédentes, dans lequel la largeur (W6) de la troisième ouverture traversante (316) augmente dans la direction radiale (303, 203) et à l'opposé e l'entrefer (10), formant un diffuseur (316).

8. Générateur selon une des revendications précédentes, dans lequel les premiers conduits de fluide et les deuxièmes conduits de fluide ont une section transversale rectangulaire ou carrée.

9. Générateur selon une des revendications précédentes, dans lequel le stator (5) est segmenté dans la direction circonférentielle (101, 201, 301) en une pluralité de segments de stator (5').

10. Générateur selon une des revendications précédentes, la puissance de sortie nominale du générateur étant supérieure à 100 kW (kilowatts), de préférence supérieure à 1,5 MW (mégawatt).

11. Générateur selon une des revendications précédentes, dans lequel les aimants (11) sont des aimants permanents (11), de préférence du type NdFeB.

12. Générateur selon une des revendications précédentes, dans lequel une troisième feuille de stratification (100) dépourvue d'ouverture traversante termine le stator (5) ou le segment de stator (5') sur une ou les deux extrémités axiales du segment de stator (5').

13. Générateur selon une des revendications précédentes, dans lequel la distance maximale (dmax) entre n'importe quel point de la zone de dent de stator (111, 211, 311) des feuilles de stratification empilées (100, 200, 300) et le conduit de fluide (frigorigène) et/ou le raccord de fluide (frigorigène) les plus proches (321, 320) est inférieure à 10 mm, mieux inférieure à 5 mm, mieux encore inférieure à 3,5 mm.

14. Générateur selon une des revendications précédentes, dans lequel le rapport entre la longueur (L2) de la première ouverture traversante (215) de la première feuille de stratification (200) et la longueur (L3) de la deuxième ouverture traversante (315) de la deuxième feuille de stratification (300) se situe entre 2 et 5, de préférence entre 3 et 4.

15. Générateur selon une des revendications précédentes, dans lequel l'épaisseur (T) des feuilles de stratification (100, 200, 300) se situe entre 0,1 mm et 2 mm.

16. Générateur selon une des revendications précédentes, dans lequel
la zone sans chevauchement des ouvertures traversantes (215, 315, 316) de première et deuxième feuilles de stratification adjacentes (200, 300) forme les parois des premier et deuxième conduits de fluide s'étendant parallèlement au plan couvert par la direction circonférentielle (101, 201, 301) et la direction radiale (203, 303), dans lequel
la zone de chevauchement des ouvertures traversantes (215, 315, 316) de premières ou deuxièmes feuilles de stratification adjacentes (200, 300) forme les parois des premier et deuxième conduits de fluide s'étendant parallèlement au plan couvert par la direction axiale (105, 404) et la direction radiale (203, 303).

17. Générateur selon une des revendications précédentes, dans lequel les feuilles de stratification (100, 200, 300) sont fixées et/ou ancrées les unes aux autres par le biais d'une résine (900).

18. Générateur selon une des revendications précédentes,
dans lequel la première pluralité de premières feuilles de stratification (200) comprend entre une et huit premières feuilles de stratification (200), de préférence entre deux et six, de préférence entre trois et cinq premières feuilles de stratification (200),
dans lequel la deuxième pluralité de deuxièmes feuilles de stratification (300) comprend entre une et huit deuxièmes feuilles de stratification (300), de préférence entre deux et six, de préférence entre trois et cinq deuxièmes feuilles de stratification (300),
dans lequel le nombre de premières feuilles de stratification (200) peut différer dans la direction axiale (105, 404),
dans lequel le nombre de deuxièmes feuilles de stratification (300) peut différer dans la direction axiale (105, 404).

19. Générateur selon une des revendications précédentes, dans lequel la deuxième feuille ou les deuxièmes feuilles de stratification (300) comprennent une quatrième ouverture traversante fermée respective (319) chevauchant la première ouverture traversante (215) d'une première feuille de stratification adjacente (200), formant/construisant ainsi un troisième raccord de fluide (319, E5) dans la direction axiale (404, 105) entre deux premiers conduits d'air adjacents ou deux premières ouvertures traversantes (215), la quatrième ouverture traversante fermée respective (319) s'étendant de préférence dans la direction radiale (103, 203, 303).

20. Générateur selon une des revendications précédentes, dans lequel la largeur (W) des ouvertures traversantes s'étendant radialement () est sensiblement la même.

21. Générateur selon une des revendications précédentes,
dans lequel la première ouverture traversante s'étendant radialement (215) de la première feuille de stratification (200, 400) est divisée en une cinquième et une sixième ouvertures traversantes s'étendant radialement fermées (217, 218) au niveau de la zone centrale (150) de la zone de dent de stator (211),
dans lequel la deuxième feuille de stratification (300, 700) comprend une quatrième ouverture traversante fermée (319) s'étendant dans la direction radiale (303) et située au niveau de la zone centrale (150) de la zone de dent de stator (311),
dans lequel les deux extrémités respectives (E6, E7) des cinquième et sixième ouvertures traversantes (217, 218) chevauchent respectivement les deux extrémités (E8, E9) de la quatrième ouverture traversante fermée (319) pour former des raccords de fluide respectifs (E7, E9, E6, E8) dans la direction axiale (404).
